# EUROPEAN PATENT SPECIFICATION

(11) **EP 1 575 751 B1**
(45) Date of publication and mention of the grant of the patent: **08.10.2008**
(21) Application number: 03772976.1
(22) Date of filing: 20.10.2003
(51) Int. Cl.: B29C 44/12, B29C 33/12

(54) **METHOD AND APPARATUS FOR MANUFACTURING PANEL BODIES OF PLASTIC MATERIAL, AND USE THEREOF**
VERFAHREN UND VORRICHTUNG ZUR HERSTELLUNG VON TAFELKÖRPERN AUS PLASTIK UND VERWENDUNG DAVON
PROCEDE ET DISPOSITIF PERMETTANT DE FABRIQUER DES CORPS DE PANNEAU EN MATIERE PLASTIQUE, ET UTILISATION CORRESPONDANTE

(30) Priority: 14.11.2002 NO 20025467
(43) Date of publication of application: 21.09.2005
(73) Proprietor: Primefloor AS, 1473 Lorenskog (NO)
(72) Inventor: STENGRIMSEN, Frank, N-1473 L renskog (NO); SPYDEVOLD, Jan, N-1624 Gressvik (NO)
(74) Representative: Langfeldt, Jens Fredrik Conradi
(86) International application number: PCT/NO2003/000346
(87) International publication number: WO 2004/043667

(56) References cited:
- WO-A1-01/96095
- DE-A1- 4 237 239
- US-A- 4 133 858
- US-A1- 2002 094 428
- DATABASE WPI Week 198025, Derwent Publications Ltd., London, GB; Class A32, AN 1980-40505C, XP002990465 & JP 55 055 817 A (FUKOKA T) 24 April 1980
- DATABASE WPI Week 199921, Derwent Publications Ltd., London, GB; Class A32, AN 1999-247883, XP002990466 & JP 11 070 541 A (NISSEI JUSHI KOGYO KK) 24 June 2002

## Description

The present invention relates to a method and apparatus for manufacturing panel bodies of plastic material, wherein the plastic material is injected into a mould cavity of a mould for the filling thereof, and a use of such a method and apparatus, as disclosed in the preamble of respective claim 1, and claim 7, and in claims 15 and 16.

A method and an apparatus of this kind is known from e.g. DE-A- 4 237 239

It is already known to mould panel bodies of plastic material, but where the material density more often than not causes such bodies to be disproportionately heavy when they have an essentially uniform thickness, e.g., several centimetres. At the same time, a disproportionately large amount of plastic material will be used in such bodies, making them disproportionately expensive.

The main object of the present invention is to overcome these known problems, and at the same time provide panel bodies which have the desired thickness as well as sufficient rigidity.

According to the invention, the method is characterised in that prior to the injection of the plastic material, strings, bars, tubes or netting of reinforcing material are placed in the mould in recessed portions of a first volume of the mould cavity, that the reinforcing material is held up point-by-point by pushers that project up through the respective bottoms of said recessed portions until the recessed portions have been filled with plastic material and surround the reinforcing material, and that the pushers are withdrawn from the recessed portions and thus from support of the reinforcing material as the mould cavity expands to its second volume.

According to the invention, the apparatus is characterised in that it has a means for locking the mould bottom in the first position until the first volume has been filled by plastic material to which a drive means has been added, that the mould bottom in a known way is designed to move into its second position as the plastic material expands, the panel body thus acquiring said second volume, that in the mould cavity, in connection with the first volume, there are provided recessed portions designed for the placement of reinforcing material of strips, bars, tubes or netting prior to the injection of the plastic material, that pushers are designed to movably project up through the bottom of the respective recessed portions in order at some points to hold the reinforcing material above the said bottom until the recessed portions have been filled with plastic material by its injection into the mould cavity to surround the reinforcing material, and that the pushers are designed to be withdrawn from the recessed portions and from supporting engagement with the reinforcing material as the mould cavity expands to its second volume.

Preferred embodiments of the invention are the subject of the respective dependent claims.

In the following, the invention is described in greater detail with reference to the attached drawings.

The invention can be used, e.g., for manufacturing panel bodies to be used as floor, wall or ceiling panels, or as shuttering or trim panels.

Fig. 1 is a vertical section through the apparatus according to the invention.

Fig. 2 is a second vertical section through the apparatus according to the invention.

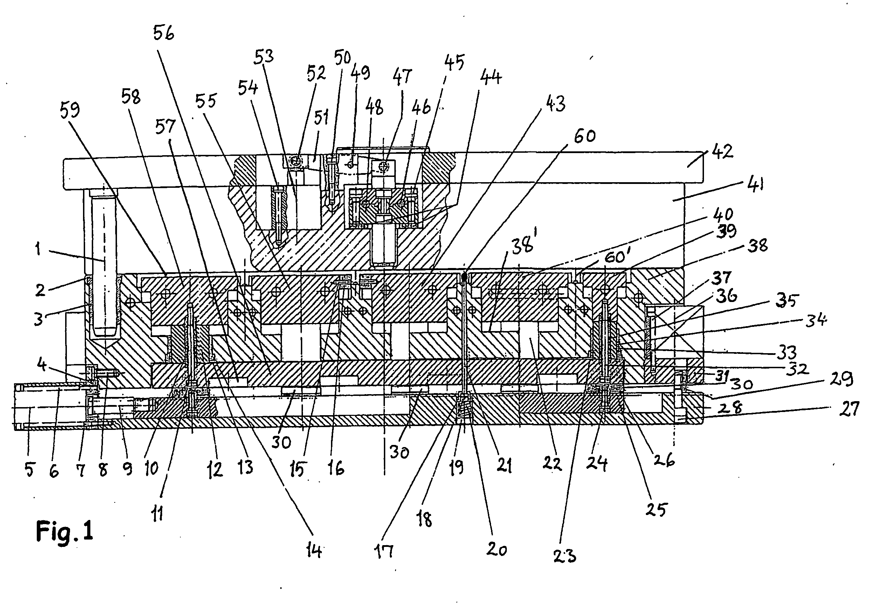

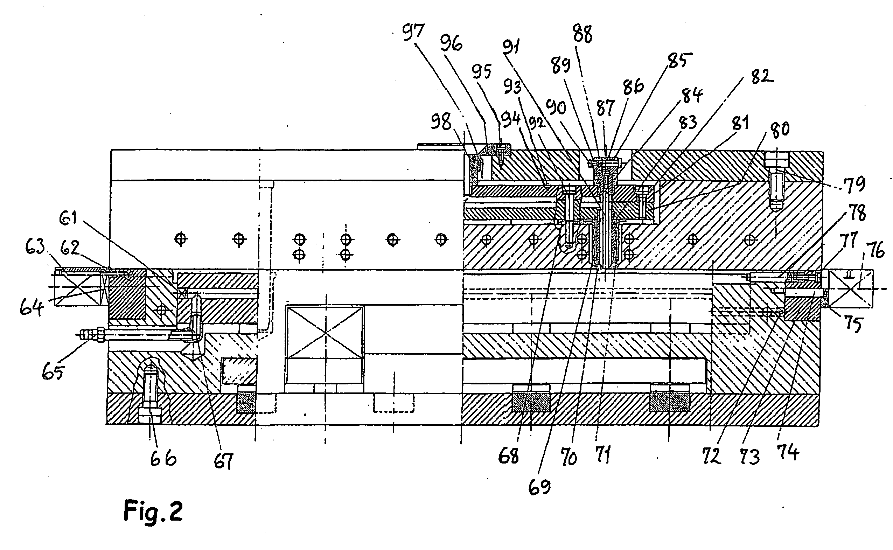

Not all the reference numerals used in Figs. 1 and 2 will be described in detail in the description of the invention, but for the sake of order they are listed below so that a skilled person will more easily understand what each numeral refers to.

Thus, the description will essentially only relate to and include the reference numerals deemed to be necessary for understanding the basic principles of the inventive idea and the illustrated embodiment that is proposed according to the invention. However, it will be understood that structural changes could be made to the embodiment shown in Figs. 1 and 2 without thereby departing from the inventive idea.

The reference numerals shown in the drawings indicate the following elements as listed in Table I below.

**Table I**

| | | |
|---|---|---|
| 1 Guide pin | 34 Flanged bearing | 67 Elbow |
| 2 Seger ring | 35 Guide sleeve | 68 Insulating washer |
| 3 Guide bushing | 36 Block cylinder | 69 Heating cartridge |
| 4 Distance plate | 37 Screw | 70 Mouthpiece |
| | 38 Moulding plate | |
| 5 Block cylinder | 38' Edge | 71 Heating cartridge |
| 6 Screw | 39 Mould component | 72 Pipe plug |
| 7 Screw | 40 Mould component | 73 Jaws |
| 8 Screw | 41 Moulding plate | 74 Spacer bolt |
| 9 Spacer bolt | 42 Backing plate | 75 Distance plate |
| 10 Guide sleeve | 43 Mould component | 76 Block cylinder |
| 11 Screw | 44 Insulating washer | 77 Screw |
| 12 Pressure cylinder | 45 Screw | 78 Core pins |
| 13 Seger ring | 46 Heating cartridge | 79 Screw |
| 14 Flanged bearing | 47 Screw | 80 Heating flue block |
| 15 Positioning dowel | 48 Heating cartridge | 81 Screw |
| 16 Guide cylinder | 49 Hinge bolt | 82 Heating flue block |
| 17 Sleeve | 50 Screw | 83 Nozzle |
| 18 Pipe plug | 51 Lever arm | 84 Guide sleeve |
| 19 Pipe plug | 52 Hinge bolt | 85 Needle piston |
| 20 Spiral spring | 53 Block cylinder | 86 Lever arm |
| 21 Pusher | 54 Screw | 87 Screw |
| 22 Pressure cylinder | 55 Mould component | 88 Hinge leaf |
| 23 Seger ring | 56 Bottom anchor bar | 89 Washer |
| 24 Screw | 57 Pressure pad receiver | 90 Screw |
| 25 Slide bar | 58 Mould component | 91 Shut-off pre nozzle |
| 26 Adjustment screw | 59 Cavity in first volume | 92 Screw |
| 27 Screw | 60 Reinforcement | 93 Screw |
| | 60' Recessed portion | |
| 28 Backing plate | 61 Pipe plug | 94 Thermosensor |
| 29 Spacer sleeve | 62 Jaws | 95 Screw |
| 30 Pressure pad | 63 Screw | 96 Guide ring |
| 31 Pusher plate | 64 Distance plate | 97 Nozzle element |
| 32 Screw | 65 Hose nipple | 98 Inlet nozzle |
| 33 Pressure cylinder | 66 Screw | |

At the outset, the cavity 59 is given a first volume V1, the space between the moulding plate 41 and the mould components 39, 40, 43, 55 and 58 that form at least a part of the bottom of the cavity being D1, e.g., 8 mm.

Plastic material containing a drive means is injected into the cavity 59 via nozzle 83, 87. This drive means may be a foaming agent or a blowing agent to enable the plastic material introduced into the cavity 59 to expand.

As soon as the cavity having volume V1 has been filled with this plastic material, a slide bar 25 having pressure pads 30 mounted thereon, is made to move towards the right (in the figure) in that pressure is applied by the cylinder 5 which causes movement of the bolt 9 towards the right and thus the bar 25, whereby these pressure pads 30 ultimately become aligned with pressure pad receivers 57 in a mould component anchor bar 56. The bar will then move downwards until it reaches a backing plate 28. By virtue of this downward movement, which is caused by the expansion of the plastic material, each of the mould components 39, 40, 43, 55 and 58 will ultimately come into contact with a respective edge 38' of a moulding plate 38, whereby the cavity 59 has simultaneously expanded to a volume V2, and where the distance between the moulding plate 41 and the mould components 39, 40, 43, 55 and 58 has now increased to D2.
This means that a panel body is obtained which has a larger volume than the first injected volume amount of plastic material, the gas-forming compound (foaming or blowing agent) causing this change in volume.

Thus, a panel body is obtained which has substantially reduced weight, but nevertheless satisfactory strength, compared with a panel body filled with a volume amount of plastic material corresponding to a cavity volume V2.

Prior to the injection of the plastic material into the cavity 59, strips, bars, tubes or netting of reinforcing material 60 can be placed in recessed portions 60' of the first volume of the mould cavity, i.e., between the mould components 39, 40, 43, 55 and 58 when these are in an uppermost position. The reinforcing material 60 is held up at point-by point by pushers 21 projecting up through the respective bottoms of said recessed portions 60' until the recessed portions have been filled with plastic material surrounding the reinforcing material whilst the cavity 59 still has its first volume V1. The pushers 21 are then withdrawn from the recessed portions and thus from support of the reinforcing material as the mould cavity expands to its second volume V2. This withdrawal of the pushers, i.e., a downwards movement, may take place by applying vacuum to an underside of the spring-loaded (spring 20) underside of the pusher 21 by connection to a pipe plug 19.

When the tops of the mould components 39, 40, 43, 55 and 58 reach the level of the bottom of the portion 60', the downward movement of the components ceases, and the moulded, volume-expanded completed element (not shown) will thus be given a planar top face and bottom face, whilst reinforcing material may be embedded therein or optionally wholly or partly dispensed with. In many cases, it may however be highly desirable to have such reinforcing material 60 embedded in the panel body in order to increase its total rigidity. The reinforcing material 60 will be completely surrounded by the expanded plastic material.

When the moulded shaped body is to be removed from the mould, the moulding plate 41 is removed, or swung to the side, e.g., about the pin 1, whereupon pressure can be applied to the pipe plug 19, thereby causing the panel to be ejected from the mould.

It is also possible to cause the slide bar 25 that is mounted on the pressure pads 30 to move towards the left (in the figure), whereby these pressure pads 30 gradually come to lie sideways relative to the pressure pad receivers 57 in the mould component anchor bar 56 and support the last-mentioned, so that the components 39, 40, 43, 55 and 58 return to their upper position as shown in Fig. 1.

In a preferred, but for the invention by no means limited embodiment, D1 = 8 mm and D2 = 28 mm, which means that the recessed portion 60' is 20 mm deep.

Advantageously, the plastic material is a polyolefin material, e.g., polyethylene or polypropylene. It may be expedient to add a talcum to the plastic material.

The first volume V1 may, e.g., be in the range of 10 - 60% of the second volume V2, preferably about 15 - 45%, and optionally more preferably about 27 - 30%.

Although it is shown that the bottom of the cavity may consist of several mould components 39, 40, 43, 55 and 58, it will be understood that it is also possible for them to be made unitarily, which might be relevant if reinforcement is not to be embedded in the panel body.

On studying Fig. 1 it will be seen that the components 39, 40, 43, 55 and 58 are basically individually movable, like the pushers 21.

Such moulded panel bodies, with or without reinforcing material, will, e.g., be highly suitable as structural members for use in, e.g., covering floors, walls or ceilings, or optionally as shuttering panels. In one particular application, such panels are intended to be used for whole or partial internal lining of transport containers.

## Claims

1. A method for manufacturing panel bodies of plastic material, where the plastic material is injected into a mould cavity (59) of a mould for the filling thereof, wherein after the injection of the plastic material the mould cavity (59) is caused to expand from a first volume V1 to a second, larger volume V2, whilst the plastic material expands, the plastic material having added thereto a drive means, and the moulded flat body is subsequently removed from the cavity of the mould, **characterised in**
- **that** prior to the injection of the plastic material, strings, bars, tubes or netting of reinforcing material are placed in recessed portions of the first volume of the mould cavity;
- **that** the reinforcing material (60) is held up point-by-point by pushers (21) that project up through the respective bottoms of said recessed portions (60') until the recessed portions have been filled with plastic material to surround the reinforcing material (60); and
- **that** the pushers (21) are withdrawn from the recessed portions (60') and thus from support of the reinforcing material (60) as the mould cavity expands to its second volume V2.

2. A method as disclosed in claim 1, **characterised in**
- **that** the mould cavity in its second volume has its bottom part level with the bottom of said recessed portions (60').

3. A method as disclosed in claim 1 or 2, **characterised in**
- **that** the plastic material is a polyolefin material, e.g., polyethylene or polypropylene.

4. A method as disclosed in claim 1, 2 or 3,
**characterised in**
- **that** the plastic material has a talcum added thereto.

5. A method as disclosed in claim 1 or 2, **characterised in**
- **that** the first volume (V1) is in the range of 10 - 60% of the second volume (V2), preferably 15 - 45% of the second volume, or more preferably about 27 - 30%.

6. A method as disclosed in claim 1, **characterised in**
- **that** the drive means is a foaming agent or a blowing agent.

7. An apparatus for manufacturing panel bodies of plastic material, wherein the plastic material is injectable into a mould cavity of a mould for the filling thereof, where the mould cavity is equipped with a movable mould bottom (39, 40, 43, 55 and 58), which in a first position defines a first volume V1 of the cavity and in a second position defines a second, larger volume V2 of the cavity, **characterised in**
- **that** the apparatus has a means (25, 30, 56) for locking the mould bottom in the first position until the first volume V1 has been filled by plastic material to which a drive means has been added;
- **that** the mould bottom in a known way is designed to move to its second position as the plastic material expands, the panel body thus acquiring said second volume V2;
- **that** in the mould cavity (59) in connection with the first volume V1, there are provided recessed portions (60') designed for the placement of reinforcing material (60) of strings, bars, tubes or netting prior to the injection of the plastic material;
- **that** pushers (21) are designed to movably project up through the bottom of the respective recessed portions (60') in order at some points to hold the reinforcing material (60) above the said bottom until the recessed portions (60') have been filled with plastic material by its injection into the mould cavity (59) to surround the reinforcing material (60); and
- **that** the pushers (21) are designed to be withdrawn from the recessed portions (60') and from supporting engagement with the reinforcing material (60) as the mould cavity expands to its second volume V2.

8. An apparatus as disclosed in claim 7, **characterised in that** the mould bottom is composed of a plurality of movable mould components (39, 40, 43, 55 and 58).

9. An apparatus as disclosed in claim 7, **characterised in**
- **that** the mould bottom consists of individually movable mould components (39, 40, 43, 55 and 58).

10. An apparatus as disclosed in claim 7, 8 or 9, **characterised in**
- **that** said mould bottom is supported by at least one bottom anchor bar (56) which on its underside has a plurality of cut-outs or pressure pad receivers (57); and
- **that** said locking means consists of an elongate body with upwardly facing pressure pad elements, where each pressure pad element is designed to be complementary to the shape of the cut-out, and where said elements in a locking position of the mould bottom each support an underside portion of the bottom anchor bar (56), and in a non-locking position permit, on expansion of the plastic material, a downward movement of the mould bottom components, the cut-out thus being moved into engagement with a respective pressure pad element.

11. An apparatus as disclosed in claim 7, 8, 9 or 10, **characterised in**
- **that** the mould cavity in its second volume V2 is designed to have its bottom part level with the bottom of the respective said recessed portions (60').

12. An apparatus as disclosed in one or more of claims 7-11,
**characterised in**
- **that** the plastic material is a polyolefin material, e.g., polyethylene or polypropylene.

13. An apparatus as disclosed in one or more of claims 7-12, **characterised in**
- **that** the plastic material has talcum added thereto.

14. An apparatus as disclosed in one or more of claims 7-13, **characterised in**
- **that** the first volume is in the range of 10 - 60% of the second volume, preferably 15 - 45% of the second volume, preferably about 27 - 30%.

15. Use of a method as disclosed in one or more of claims 1-6, for manufacturing reinforced panel bodies for use as floor, wall or ceiling panels, or as shuttering or trim panels.

16. Use of an apparatus as disclosed in one or more of claims 7-14, for manufacturing reinforced panel bodies for use as floor, wall or ceiling panels, or as shuttering or trim panels.

## Patentansprüche

1. Verfahren zur Herstellung von Plattenkörpern aus Kunststoff, bei dem das Kunststoffmaterial in eine Formkavität (59) einer Form zur Füllung dieser eingespritzt wird, wobei sich die Formkavität (59) durch die Einspritzung des Kunststoffmaterials von einem ersten Volumen V1 zu einem zweiten, größeren Volumen V2 erweitert, während sich das Kunststoffmaterial erweitert, wobei dem Kunststoffmaterial ein Antriebsmittel zugeführt ist, und der geformte flache Körper anschließend aus der Kavität der Form entfernt wird, **dadurch gekennzeichnet,**
- **dass** im Vorfeld der Einspritzung des Kunststoffmaterials Drähte, Stäbe, Rohre oder Gewebe eines Bewehrungsmaterials (60) in zurückliegenden Abschnitten (60') des ersten Volumens V1 der Formkavität eingebracht werden;
- **dass** das Bewehrungsmaterial (60) Punkt für Punkt von Schiebern (21) festgehalten wird, die durch die jeweiligen Enden der vorgenannten zurückliegenden Abschnitte (60') treten, bis der zurückliegende Abschnitt mit Kunststoffmaterial gefüllt worden ist und das Bewehrungsmaterial (60) umgibt; und
- **dass** die Schieber (21) aus den zurückliegenden Abschnitten (60') und somit als Unterstützung für das Bewehrungsmaterial (60) zurückgezogen werden, als sich die Formkavität zu ihrem zweiten Volumen V2 erweitert.

2. Verfahren nach Anspruch 1, **dadurch gekennzeichnet,**
- **dass** der Endabschnitt der Formkavität in ihrem zweiten Volumen mit den Endabschnitten der vorgenannten zurückliegenden Abschnitte (60') auf gleicher Höhe liegt.

3. Verfahren nach Anspruch 1 oder 2, **dadurch gekennzeichnet,**
- **dass** das Kunststoffmaterial ein Polyolefin-Material, z. B. Polyäthylen oder Polypropylen, ist.

4. Verfahren nach Anspruch 1, 2 oder 3, **dadurch gekennzeichnet,**
- **dass** dem Kunststoffmaterial ein Talkum zugesetzt ist.

5. Verfahren nach Anspruch 1 oder 2, **dadurch gekennzeichnet,**
- **dass** das erste Volumen (V1) im Bereich von 10 bis 60 % des zweiten Volumens (V2), bevorzugt 15 bis 45 % des zweiten Volumens, oder weiter bevorzugt ca. 27 bis 30 %, liegt.

6. Verfahren nach Anspruch 1, **dadurch gekennzeichnet,**
- **dass** das Antriebsmittel ein Schäummittel oder ein Treibmittel ist.

7. Einrichtung zur Herstellung von Plattenkörpern aus Kunststoffmaterial, bei der sich das Kunststoffmaterial in eine Formkavität einer Form zur Füllung dieser einspritzen lässt, wobei die Formkavität ein bewegliches Formende (39, 40, 43, 55 und 58) aufweist, das in einer ersten Position ein erstes Volumen V1 der Kavität und in einer zweiten Position ein zweites, größeres Volumen V2 der Kavität definiert, **dadurch gekennzeichnet,**
- **dass** die Einrichtung eine Vorrichtung (25, 30, 56) aufweist, die das Formende in der ersten Position abschließt, bis das erste Volumen V1 mit einem Kunststoffmaterial, dem ein Antriebsmittel zugeführt ist, gefüllt worden ist;
- **dass** das Formende auf bekannter Weise so ausgeformt ist, dass es sich bei Erweiterung des Kunststoffmaterials in die zweite Position bewegt, wobei der Plattenkörper das genannte Volumen V2 einnimmt,
- **dass** in der Formkavität (59) in Verbindung mit dem ersten Volumen V1 zurückliegende Abschnitte (60') ausgeformt sind für die Anbringung von Bewehrungsmaterial (60) wie Drähte, Stäbe, Rohre oder Gewebe im Vorfeld der Einspritzung des Kunststoffmaterials;
- **dass** Schieber (21) ausgeformt wurden, um beweglich durch das Ende der jeweils zurückliegenden Abschnitte (60') zu treten und an einigen Punkten das Bewehrungsmaterial (60) über das genannte Ende festzuhalten bis die zurückliegenden Abschnitte (60') mit Kunststoffmaterial gefüllt worden sind, welches in die Formkavität (59) zum Umgeben des Bewehrungsmaterials (60) eingespritzt wird; und
- **dass** die Schieber (21) so ausgeformt sind, dass sie aus den zurückliegenden Abschnitten (60') und somit als Unterstützung für das Bewehrungsmaterial (60) zurückgezogen werden, als sich die Formkavität zu ihrem zweiten Volumen V2 erweitert.

8. Einrichtung nach Anspruch 7, **dadurch gekennzeichnet, dass** das Formende aus einer Mehrheit von bewegbaren Formteilen (39, 40, 43, 55 und 58) besteht.

9. Einrichtung nach Anspruch 7, **dadurch gekennzeichnet,**
- **dass** das Formende aus individuell bewegbaren Formteilen (39, 40, 43, 55 und 58) besteht.

10. Einrichtung nach Anspruch 7, 8 oder 9, **dadurch gekennzeichnet,**
- **dass** das genannte Formende von mindestens einem Endankerbalken (56) unterstützt wird, welcher an seiner Unterseite eine Mehrheit von Aussparungen oder Druckkissenempfänger (57) aufweist, und
- **dass** die genannte Abschließvorrichtung aus einem länglichen Körper mit nach oben zeigenden Druckkissenelementen besteht, wobei jedes Druckkissenelement komplementär zur Form der Aussparung ausgebildet ist, und wobei die genannten Elemente in Abschließposition des Formendes jeweils einen unterseitigen Abschnitt des Endankerbalkens (56) unterstützen und in einer nicht abgeschlossenen Position, bei Erweiterung des Kunststoffmaterials, eine nach unten gerichtete Bewegung der Formendekomponenten erlauben, wobei die Aussparung in Kontakt mit einem jeweiligen Druckkissenelement gebracht wird.

11. Einrichtung nach Anspruch 7, 8, 9 oder 10, **dadurch gekennzeichnet,**
- **dass** die Formkavität in ihrem zweiten Volumen V2 so ausgeformt ist, dass der Endabschnitt mit den Endabschnitten der vorgenannten zurückliegenden Abschnitte (60') auf gleicher Höhe liegt.

12. Einrichtung nach einem der Ansprüche 7 bis 11, **dadurch gekennzeichnet,**
- **dass** das Kunststoffmaterial ein Polyolefin-Material, z. B. Polyäthylen oder Polypropylen, ist.

13. Einrichtung nach einem der Ansprüche 7 bis 12, **dadurch gekennzeichnet,**
- **dass** dem Kunststoffmaterial ein Talkum zugesetzt ist.

14. Einrichtung nach einem der Ansprüche 7 bis 13, **dadurch gekennzeichnet,**
- **dass** das erste Volumen im Bereich von 10 bis 60 % des zweiten Volumens, bevorzugt 15 bis 45 % des zweiten Volumens, bevorzugt ca. 27 bis 30 %, liegt.

15. Anwendung eines Verfahrens nach einem der Ansprüche 1 bis 6 für die Herstellung verstärkter Plattenkörper für die Anwendung als Boden-, Wand-oder Deckenplatten oder als Schalungs- oder Trimmplatten.

16. Anwendung eines Verfahrens nach einem der Ansprüche 7 bis 14 für die Herstellung verstärkter Plattenkörper für die Anwendung als Boden-, Wand-oder Deckenplatten oder als Schalungs- oder Trimmplatten.

## Revendications

1. Méthode pour la fabrication de corps de panneau en plastique, dans le cadre de laquelle le plastique est injecté dans une empreinte (59) d'un moule conçu pour son remplissage, où, après l'injection du plastique, l'empreinte (59) est gonflée d'un premier volume V1 à un second volume plus large V2 à mesure que gonfle le plastique, additionné d'un agent d'expansion à cette fin, et où le corps plat moulu est ensuite ôté de l'empreinte, méthode qui se **caractérise par :**
- **le fait que** préalablement à l'injection du plastique, les fils, les barres, les tubes ou le grillage en matière de renfort (60) sont placés dans des portions en retrait (60') du premier volume V1 de l'empreinte (59) ;
- **le fait que** la matière de renfort (60) est soutenue point par point par des poussoirs (21) qui font saillie à travers les fonds respectifs desdites portions en retrait (60') jusqu'à ce que la portion en retrait soit remplie de plastique pour entourer la matière de renfort (60) ; et
- **le fait que** les poussoirs (21) se retirent des portions en retrait (60') et donc du support de la matière de renfort (60) lorsque l'empreinte gonfle à son second volume V2.

2. Méthode selon la revendication 1, **caractérisée par :**
- **le fait que** lorsque l'empreinte est gonflée à son second volume, son fond est au même niveau que le fond desdites portions en retrait (60').

3. Méthode selon la revendication 1 ou 2, **caractérisée par :**
- **le fait que** le plastique est une matière polyoléfinique, telle que le polyéthylène ou le polypropylène.

4. Méthode selon la revendication 1, 2 ou 3, **caractérisée par :**
- **le fait que** le plastique est additionné d'un talc.

5. Méthode selon la revendication 1 ou 2, **caractérisée par :**
- **le fait que** le premier volume (V1) est compris entre 10 et 60 % du second volume (V2), préférentiellement entre 15 et 45 % du second volume ou plus préférentiellement entre 27 à 30 %.

6. Méthode selon la revendication 1, **caractérisée par :**
- **le fait que** l'agent d'expansion est un agent moussant ou un agent gonflant.

7. Appareil pour la fabrication de corps de panneau en plastique, dans lequel le plastique est injectable dans une empreinte d'un moule conçu pour son remplissage, où l'empreinte est pourvue d'un fond mobile (39, 40, 43, 55 et 58) qui, dans une première position, définit un premier volume V1 de l'empreinte et, dans une seconde position, définit un second volume plus large V2 de l'empreinte, appareil qui se **caractérise par :**
- **le fait que** l'appareil possède un dispositif (25, 30, 56) de verrouillage du fond du moule en première position jusqu'à ce que le premier volume V1 soit rempli de plastique additionné d'un agent d'expansion ;
- **le fait que** le fond du moule est conçu, de manière connue, pour se déplacer en seconde position lorsque le plastique gonfle, le corps de panneau acquérant alors ledit second volume V2 ;
- **le fait que** dans le cadre du premier volume V1, l'empreinte (59) comprend des portions en retrait (60') conçues pour le placement d'une matière de renfort (60) en fils, barres, tubes ou grillage préalablement à l'injection du plastique ;
- **le fait que** les poussoirs (21) sont conçus pour mobilement faire saillie à travers le fond des portions en retrait respectives (60') afin de soutenir à certains points la matière de renfort (60) au-dessus dudit fond jusqu'à ce que les portions en retrait (60') soient remplies de plastique via son injection dans l'empreinte (59) en vue d'entourer la matière de renfort (60) ; et
- **le fait que** les poussoirs (21) sont conçus pour se retirer des portions en retrait (60') et donc du support de la matière de renfort (60) lorsque l'empreinte gonfle à son second volume V2.

8. Appareil selon la revendication 7, **caractérisé par le fait que** le fond du moule se compose de plusieurs composants de moule mobiles (39, 40, 43, 55 et 58).

9. Appareil selon la revendication 7, **caractérisé par :**
- **le fait que** le fond du moule se compose de composants de moule individuellement mobiles (39, 40, 43, 55 et 58).

10. Appareil selon la revendication 7, 8 ou 9, **caractérisé par :**
- **le fait que** ledit fond du moule est soutenu par au moins une barre d'ancrage de fond (56) dont la surface inférieure présente plusieurs découpes ou récepteurs de tampons de pression (57), et
- **le fait que** ledit dispositif de verrouillage se compose d'un corps allongé à éléments de tampons de pression orientés vers le haut, où chaque élément de tampon de pression est conçu pour compléter la forme de la découpe, et où lesdits éléments, dans une position de verrouillage du moule, soutiennent chacun une portion inférieure de la barre d'ancrage de fond (56) et, dans une position de non-verrouillage, permettent, lors du gonflement du plastique, la descente des composants du fond du moule, la découpe s'engageant ainsi dans l'élément de tampon de pression respectif.

11. Appareil selon la revendication 7, 8, 9 ou 10, **caractérisé par :**
- **le fait que**, lorsque l'empreinte est gonflée à son second volume V2, elle est conçue de telle sorte que son fond soit au même niveau que le fond desdites portions en retrait respectives (60').

12. Appareil selon l'une ou plusieurs des revendications 7 à 11, **caractérisé par :**
- **le fait que** le plastique est une matière polyoléfinique, telle que le polyéthylène ou le polypropylène.

13. Appareil selon l'une ou plusieurs des revendications 7 à 12, **caractérisé par :**
- **le fait que** le plastique est additionné d'un talc.

14. Appareil selon l'une ou plusieurs des revendications 7 à 13, **caractérisé par :**
- **le fait que** le premier volume est compris entre 10 et 60 % du second volume, préférentiellement entre 15 et 45 % du second volume ou plus préférentiellement entre 27 à 30 %.

15. Application d'une méthode selon l'une ou plusieurs des revendications 1 à 6 pour la fabrication de corps de panneau renforcés à utiliser comme panneaux de sol, de mur ou de plafond ou comme panneaux de coffrage ou de garnissage.

16. Utilisation d'un appareil selon l'une ou plusieurs des revendications 7 à 14 pour la fabrication de corps de panneau renforcés à utiliser comme panneaux de sol, de mur ou de plafond ou comme panneaux de coffrage ou de garnissage.
